# EUROPEAN PATENT APPLICATION

(11) **EP 3 677 502 A1**
(43) Date of publication of application: **08.07.2020**
(21) Application number: 17923857.1
(22) Date of filing: 28.08.2017
(51) Int. Cl.: B64C 1/30, B64C 1/06, B64C 27/08

(54) **FRAME ASSEMBLY OF UNMANNED AERIAL VEHICLE, AND UNMANNED AERIAL VEHICLE**

(71) Applicant: SZ DJI Technology Co., Ltd., Shenzhen, Guangdong 518057 (CN)
(72) Inventor: WEI, Jingjing, Shenzhen Guangdong 518057 (CN); LIANG, Guibin, Shenzhen Guangdong 518057 (CN)
(74) Representative: Appelt, Christian W.
(86) International application number: PCT/CN2017/099325
(87) International publication number: WO 2019/041097

(57) **Abstract**

The present disclosure provides a frame assembly of an unmanned aerial vehicle (UAV) and a UAV. The frame assembly includes a center frame (1) and two arm assemblies (2) located at two sides of the center frame, respectively. The arm assembly includes an arm (21) connected to the center frame, a deformation rod (22), and a support rod (23). Two ends of the deformation rods are rotatably connected to the arm and the support rod, respectively, and the support rod and the arm are parallel to each other. The support rod moves while being parallel to the arm such that the support rod is selectively in a folded state or an unfolded state. When the support rod moves translationally relative to the arm to the unfolded state, the support rod drives the deformation rod to rotate, so that the two ends of the deformation rod form first preset angles with the arm and the support rod, respectively, and the support rod is used as a stand. When the support rod moves translationally relative to the arm to the folded state, the support rod dives the deformation rod to rotate, so that the two ends of the deformation rods form second preset angles with the arm and the support rod, respectively, and the second preset angles are smaller than the first preset angles.

## Description

### TECHNICAL FIELD

The present disclosure relates to unmanned aerial vehicle stand field and, more particularly, to a frame assembly of an unmanned aerial vehicle (UAV) and an unmanned aerial vehicle (UAV).

### BACKGROUND

An unmanned aerial vehicle (UAV) stand is generally designed as a fixed stand or a foldable stand. The design of the fixed stand is relatively simple as long as the stand can support the body of the UAV. However, while the UAV is in flight, the fixed stand may block a photographing device mounted under the UAV body from photographing normally because the fixed stand is not foldable. The foldable stand not only can support the UAV body, but also turn up in the pitch direction of the UAV to avoid blocking the photographing device mounted under the UAV body while the UAV is in flight. However, the foldable stand is relatively big and not convenient for packaging and transportation.

### SUMMARY

The disclosure provides a frame assembly of an unmanned aerial vehicle (UAV) and an unmanned aerial vehicle (UAV).

In accordance with a first aspect of the disclosure, there is provided a frame assembly of the UAV, including a center frame and two arm assemblies located respectively on two sides of the center frame. The arm assembly includes an arm connected to the center frame, deformation rods, and a support rod. Two ends of the deformation rod are rotatably connected to the arm and the support rod, respectively, and the support rod is parallel to the arm. The support rod can move while being parallel to the arm, so that the support rod may be selectively in folded state or unfolded state. While the support rod moves translationally relative to the arm to reach the unfolded state, the support rod drives the deformation rods to rotate for the two ends of the deformation rods to form first preset angles with the arm and the support rod, respectively, so that the support rod is used as a stand. While the support rod moves translationally relative to the arm to reach the folded state, the support rod drives the deformation rods to rotate for the two ends of the deformation rods to form second preset angles with the arms and the support rod, respectively, and the second preset angles are smaller than the first preset angles.

In accordance with a second aspect of the disclosure, there is provided an unmanned aerial vehicle (UAV), including a frame assembly and a power system located at the frame assembly. The power system is used to provide flying power for the UAV. The frame assembly includes a center frame and two arm assemblies located on two sides of the center frame, respectively. The arm assembly includes an arm connected to the center frame, deformation rods, and a support rod, the two ends of the deformation rod are rotatably connected to the arm and the support rod, respectively, and the support rod is parallel to the arm. The support rod can move while being parallel to the arm, so that the support rod may be selectively in the folded state or the unfolded state. While the support rod move translationally relative to the arm to reach the unfolded state, the support rod drives the deformation rods to rotate for the two ends of the deformation rods to form first preset angles with the arm and the support rod, respectively, so that the support rod is used as a stand. While the support rod moves translationally relative to the arm to reach the folded state, the support rod drives the deformation rods to rotate for the two ends of the deformation rods to form second preset angles with the arm and the support rod, respectively, and the second preset angles are smaller than the first preset angles.

Based on the technical solution provided by the embodiments of the present disclosure, with the support rod being set parallel to the arm, and with the translational movement of the support rod relative to the arm due to the support rod driven deformation of the deformation rods, the support rod can switch states between the unfolded state and the folded state. On one hand, the support rod can support the UAV. On the other hand, the support rod can approach the arm to prevent the support rod from blocking the photographing device mounted under the UAV and reduce the volume of the frame assembly for convenient UAV packaging and transportation, and for the UAV to fly in a tight space.

### BRIEF DESCRIPTION OF THE DRAWINGS

To more clearly describe the technical solutions in the embodiments of the present disclosure, the reference drawings described in the embodiments are briefly introduced below. The following described reference drawings are merely some embodiments of the present disclosure. One of ordinary skill in the art can obtain other reference drawings according to these reference drawings without any creative efforts.
FIG. 1 is a perspective view of a frame assembly according to an embodiment of the disclosure, which reveals the structural relationship of the frame assembly when the support rod is in the unfolded state relative to the arm.
FIG. 2 is a perspective view of the frame assembly in another viewing direction according to an embodiment of the disclosure, which reveals the structural relationship of the frame assembly when the support rod is in the unfolded state relative to the arm.
FIG. 3 is a perspective view of the frame assembly according to an embodiment of the disclosure, which reveals the structural relationship of the frame assembly when the support rod is in the folded state relative to the arm.
FIG. 4 is a perspective view of the frame assembly in another viewing direction according to an embodiment of the disclosure, which reveals the structural relationship of the frame assembly when the support rod is in the folded state relative to the arm.

### Reference numerals:

| | |
|---|---|
| 1: center frame; | |
| 2: arm assembly; | 21: arm; 22: deformation rod; 23: support rod; |
| 3: connection rod; | |
| 4: gimbal assembly; | 41: gimbal; 42: photographing device; |
| 5: power system. | |

### DETAILED DESCRIPTION OF THE EMBODIMENTS

Technical solutions in the embodiments of the present disclosure will be clearly and completely described with reference to the drawings. The described embodiments are only some embodiments not all the embodiments of the present disclosure. Based on the embodiments of the present disclosure, all other embodiments obtained by those of ordinary skill in the art without creative efforts are within the scope of the present disclosure.

Detailed description is provided for the frame assembly of the UAV of the present disclosure with reference to the drawings. In case of no conflict, the following embodiments and the features of the implementations can be combined with each other.

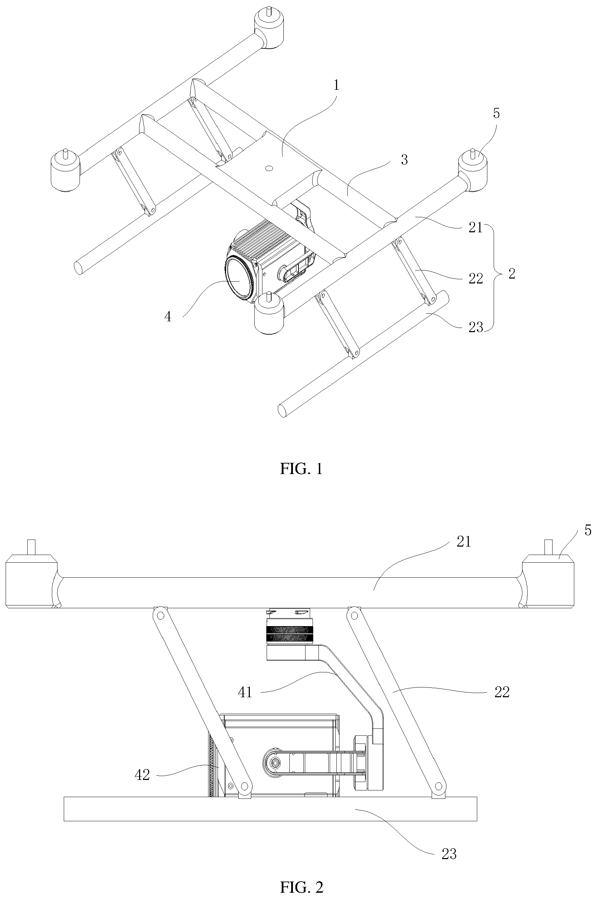

As shown in FIG. 1, embodiments of the disclosure provides a UAV frame assembly. The frame assembly includes a center frame 1 and two arm assemblies 2 located respectively on two sides of the center frame 1. The arm assembly 2 includes an arm 21 connected to the center frame 1, deformation rods 22, and a support rod 23. Two ends of the deformation rods 22 are rotatably connected respectively to the arm 21 and the support rod 23. For example, a hinged connection, a sleeve ring connection, or another rotational connection may be applied to realize the rotational connection between the deformation rods 22 and arm 21 or between the deformation rods 22 and the support rod 23.

The support rod 23 is parallel to the arm 21, and the support rod 23 can move while being parallel to the arm 21, so that the support rod 23 may be selectively in a folded state or an unfolded state. In the present embodiment, the support rod 23 always keeps a parallel relationship with respect to the arm 21 while moving, to reduce the volume of the arm assembly 2.

As shown in FIG. 2, while the support rod 23 moves translationally relative to the arm 21 to the unfolded state, the support rod 23 drives the deformation rods 22 to rotate, so that two ends of the deformation rods 22 form first preset angles respectively with the arm 21 and the support rod 23, and the support rod 23 is used as a stand. In general, the support rod 23 is in the unfolded state when the UAV is landing. The support rod 23 can be used as the stand to support the UAV to ensure that the UAV can land smoothly to the destination.

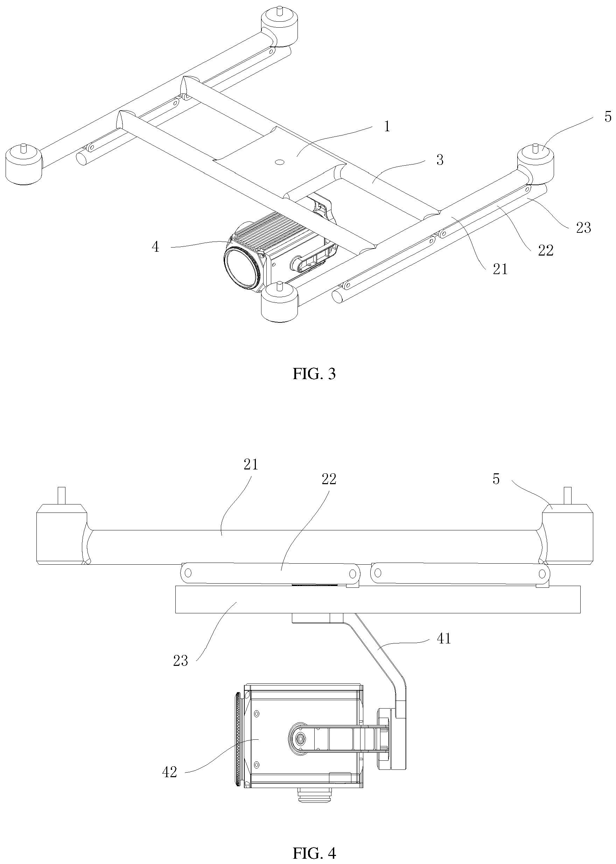

With reference to FIG. 3 and FIG. 4, while the support rod 23 moves translationally relative to the arm 21 to the folded state, the support rod 23 drives the deformation rods 22 to rotate, so that the two ends of the deformation rods 22 form second preset angles respectively with the arm 21 and the support rod 23. The second preset angles are smaller than the first preset angles. When the UAV is performing a task (aerial photographing) or the UAV is packaged or transported, the support rod 23 is set to the folded state to prevent the support rod 23 and the deformation rods 22 from blocking the photographing device mounted under the UAV during aerial photographing and reduce the volume of the arm assembly 2 for convenient packaging, transportation, and cost reduction.

In the embodiments of the present disclosure, with the support rod 23 being set parallel to the arm 21, and through the movement of the support rod 23 while being parallel to the arm 21 due to the deformation of the deformation rod 22 driven by the support rod 23, the support rod 23 can switch states between the unfolded state and the folded state. The support rod 23 can support the UAV and also can approach the arm 21 to prevent the support rod 23 from blocking the photographing device mounted under the UAV, and reduce the volume of the frame assembly for convenient UAV packaging or transportation and for the UAV to fly in a tight space.

The angle between the deformation rod 22 and the arm 21 and the angle between the deformation rod 22 and the support rod 23 are two alternate interior angles. In the embodiments of the present disclosure, when the support rod 23 moves translationally relative to the arm 21 to the folded state, taking the rotation direction of the deformation rod 22 as reference, the angle between the deformation rod 22 and the arm 21 is the angle formed between the deformation rod 22 and the part of the arm 21 to which the deformation rod 22 approaches in the rotation direction. When the support rod 23 moves translationally relative to the arm 21 to the unfolded state, taking the rotation direction of the deformation rod 22 as reference, the angle between the deformation rod 22 and the arm 21 is the angle formed between the deformation rod 22 and the part of the arm 21 from which the deformation rod 22 moves away in the rotation direction. The angle between the deformation rod 22 and the support rod 23 is the alternate interior angle of the angle between the deformation rod 22 and the arm 21.

The size of the first preset angle and the second preset angle can be selected according to the weight of the center frame 1, the weight of the gimbal assembly 4 mounted at the center frame 1, and etc., so that when the deformation rod 22 is at the first preset angle relative to the arm 21, the support rod 23 can be used as the stand to support the UAV, and when the deformation rod 22 is at the second preset angle relative to the arm 21, the support rod 23 can approach the arm 21 as close as possible to prevent the support rod 23 from folding the photographing device mounted under the center frame 1 and reduce the dimensions of the UAV for convenient UAV packaging, transportation and for the UAV to fly in the tight space. In some embodiments, the first preset angle may be larger than or equal to 30° and smaller than or equal to 90°. For example, the first preset angle may be any one of 30°, 40°, 45°, 50°, 60°, 70°, 80°, 90°, or another degree in middle ranges. The second preset angle may be smaller than 20°. For example, the second preset angle may be any one of 0°, 5°, 10°, 15°, or another degree in middle ranges.

The first preset angle and the second preset angle can allow a deviation in a certain range, for example, ±0.1%. Taking the first preset angle being 90° as an example for further explanation, the support rod 23 is in the unfolded state when the first preset angle is in the range of 90±0.09°.

The frame assembly may also include stoppers (not shown). When the support rod 23 moves translationally relative to the arm 21 to the unfolded state, the stoppers restrict the deformation rods 22 from continuing in the previous rotation direction (i.e., the corresponding direction for the support rod 23 to move translationally relative to the arm 21 to the unfolded state), so that the angle between the deformation rod 22 and the arm 21 does not exceed the maximum value of the first preset angle (e.g., 90°).

In some embodiments, when the support rod 23 is in unfolded state, the support rod 23 can be driven continuously to rotate in the previous rotation direction (i.e., the corresponding direction for the support rod 23 to move translationally relative to the arm 21 to the unfolded state) relative to the arm 21 for the support rod 23 to be stably maintained in the unfolded state under the action of the stoppers so as to support the UAV.

The method to drive the support rod 23 to move translationally relative to the arm 21 can be selected according to needs to satisfy different requirements. For example, in one embodiment, a manual method is implemented to drive the support rod 23 to move translationally relative to the arm 21. A user can directly move the support rod 23 translationally to drive the deformation rods 22 to rotate, so that the support rod 23 approaches or moves away from the arm 21, and correspondingly the support rod 23 moves translationally relative to the arm 21 to the folded state or the unfolded state.

In another embodiment, an electrical method is implemented to drive the support rod 23 to move translationally relative to the arm 21. The frame assembly can also include a driving mechanism (not shown), which drives the deformation rods 22 to rotate or drives the support rod 23 to move translationally relative to the arm 21, so that the support rod 23 approaches or moves away from the arm 21, and correspondingly the support rod 23 moves translationally relative to the arm 21 to the folded state or the unfolded state. The driving mechanism can be an electrical motor or another driving mechanism.

In the embodiments of the present disclosure, while the support rod 23 approaches or moves away from the arm 21, the support rod 23 and the arm 21 are always parallel to each other to reduce the volume of the arm assembly 2 and improve the flight safety of the UAV.

As shown in FIG. 1, in the present embodiment, the arms 21 of the two arm assemblies 2 are set parallel to each other with an interval. The structure is simple, and the frame assembly has a better balance. The arrangement of the arms 21 of the two arm assemblies 2 is not limited, and the arrangement of the arms 21 of the two arm assemblies 2 can be set according to actual situations.

The number of the deformation rods 22 can be selected according to the stability requirement of the arm assembly 2. For example, each arm assembly 2 can include one, two, or more than two deformation rods 22. For example, each arm assembly 2 has at least two deformation rods 22 to ensure the stability of the arm assembly 2. In a specific embodiment, each arm assembly 2 has two deformation rods 22, and the arm 21, the deformation rods 22, and the support rod 23 of each arm assembly 2 form a four-link mechanism. The two deformation rods 22 can ensure that the support rod 23 can stably move translationally relative to the arm 21, and at the same time reduce the weight of the arm assembly 2 as much as possible.

The arrangement of the deformation rods 22 can also be set according to the stability requirement of the arm assembly 2. For example, at least two deformation rods 22 of each arm assembly 2 can be parallel to each other or arranged to cross each other. By setting the deformation rods 22 parallel to each other, the spatial volume of the structure formed by the three parts of the arm 21, the deformation rods 22, and the support rod 23 is minimum. The stability of the arm assembly 2 is stronger by cross-arranging the deformation rods 22.

In the embodiments of the present disclosure, two ends of each of at least two deformation rods 22 are rotatably connected respectively to the arm 21 and the support rod 23, so that the deformation rods 22 can rotate relative to the arm 21 and the support rod 23, to keep the support rod 23 and the arm 21 parallel to each other.

In the following embodiments, the translational movement of the support rod 23 relative to the arm 21 in each arm assembly 2 is further explained with an example in which the at least two deformation rods 22 of each arm assembly 2 are set parallel to each other and the electrical method is implemented to drive the support rod 23 to move translationally relative to the arm 21.

The driving mechanism can drive at least two deformation rods 22 to rotate in the same direction, so that the support rod 23 approaches or moves away from the arm 21. For example, in one embodiment, the deformation rods 22 are driven by the driving mechanism to rotate in the clockwise direction, so that the support rod 23 moves translationally relative to the arm 21 to the folded state. The deformation rods 22 are driven by the driving mechanism to rotate in the counterclockwise direction, so that the support rod 23 moves translationally relative to the arm 21 to the unfolded state. In another embodiment, the deformation rods 22 are driven by the driving mechanism to rotate in the clockwise direction, so that the support rod 23 moves translationally relative to the arm 21 to the unfolded state. The deformation rods 22 are driven by the driving mechanism to rotate in the counterclockwise direction, so that the support rod 23 moves translationally relative to the arm 21 to the folded state.

In other embodiments, the at least two deformation rods 22 can be driven by the driving mechanism to rotate in different directions. For example, one or more of the deformation rods 22 rotate in the clockwise direction, and another one or more of the deformation rods 22 rotate in the counterclockwise direction, so that the deformation rods 22 can switch the states between the folded state and the unfolded state. The present disclosure does not restrict the rotation directions of the deformation rods 22.

With reference to FIG. 3 and FIG. 4, the distance between two adjacent deformation rods 22 is equal to or longer than the length of the deformation rods 22. When the support rod 23 is in folded state, one side of the deformation rods 22 (non-rotating side) fully fits the arm 21, and the other side fully fits the support rod 23, so that the volume of the arm assembly 2 is minimum for the UAV to conveniently perform tasks and for convenient UAV packaging or transportation. In some embodiments, the driving mechanism drives the deformation rod 22 to rotate to the first position (the position for the support rod 23 in the folded state), where the deformation rod 22 are sandwiched between the arm 21 and the support rod 23, and the two sides of the deformation rod 22 fit the arm 21 and the support rod 23, respectively, i.e., the angle between the deformation rod 22 and the arm 21 is 0°, and the angle between the deformation rod 22 and the support rod 23 is 0°, so that the volume of the frame assembly is minimum.

With reference to FIG. 1, the frame assembly also includes connection rods 3, and the arm 21 is fixedly connected to the center frame 1 by the connection rods 3. The center frame 1 and the connection rods 3 can be set as one-piece, so the structure is simple, and the strength is high. The center frame 1 and the connection rods 3 can also be set separately. For example, the connection rods 3 can be folded to connect to the center frame 1 for convenient folding storage. When the center frame 1 and the connection rod 3 are set separately, in some embodiments, one end of the connection rod 3 is connected to the center frame 1, and the other end is connected to the arm 21. In some embodiments, as shown in FIG. 1, the center frame 1 is connected to the middle of the connection rod 3, and the two ends of the connection rod 3 are connected respectively to the arms 21.

The number of the connection rods 3 can be set according to the needs to satisfy the stability requirement of the UAV, for example, two or more than two. In the present embodiment, the connection rods 3 have a number of two and are set parallel to each other with an interval, and the center frame 1 is connected between the two connection rods 3.

When the support rod 23 switches the state between the folded state and the unfolded state, the driving mechanism drives the at least two deformation rods 22 to rotate around a perpendicular line perpendicular to the support rod 23, so that the support rod 23 approaches or moves away from the arm 21 to fold or unfold the support rod 23.

In addition, the driving mechanism can also drive the at least two deformation rods 22 to rotate around the center axial line of the arm 21 to adjust the angle between the deformation rods 22 and a perpendicular line, so that when the support rod 23 is used as the stand, the angle between the deformation rods 22 and the perpendicular line is appropriate to improve the support stability, similar to a foldable stand.

With reference to FIG. 1, the bottom of the center frame 1 is configured to mount the gimbal assembly 4. The two arm assemblies 2 are located respectively on two sides of the gimbal assembly 4 to prevent the arm assemblies 2 from blocking the gimbal assembly 4. The gimbal assembly 4 includes a gimbal 41 connected to the bottom of the center frame 1 or a photographing device 42 carried by the gimbal 41. The driving mechanism drives the deformation rods 22 to rotate to the first position (the position for the support rod 23 at the folded state) or drives the support rod 23 to move translationally relative to the arm 21 to the folded state, the deformation rods 22 are sandwiched between the arm 21 and the support rod 23, and the arm assembly 2 is above the photographing device 42. Regardless of whether the deformation rods 22 rotate to the first position, or the support rod 23 moves translationally relative to the arm 21 to the folded state, the support rod 23 is finally folded. The arm assembly 2 is above the photographing device 42 and will not block the photographing device 42, and the photographing device 42 can rotate 360° for photographing.

In some embodiments, the deformation rods 22 and the support rod 23 are at the bottom of the arm 21 to reduce the dimension of the arm assembly 2 on horizontal plane. The deformation rods 22 and the support arm 23 can also be on the side of the arm 21 away from the center frame 1.

With reference to FIG. 1 and FIG. 4, embodiments of the present disclosure also provide an unmanned aerial vehicle (UAV), which includes the frame assembly described above and a power system 5 arranged at the frame assembly. The power system 5 provides flight power to the UAV.

The power system 5 may include a propeller assembly.

The UAV also includes the gimbal assembly 4 mounted under the center frame 1. The gimbal assembly 4 includes the gimbal 41 connected to the bottom of the center frame 1 and the photographing device 42 carried by the gimbal 41. The gimbal 41 may be a two-axis gimbal or a three-axis gimbal, etc.

In the embodiments of the present invention, the UAV may be a four-rotor UAV, but is not limited to a four-rotor UAV. For example, the UAV may be an eight-rotor UAV.

In the present disclosure, the relationship terms such as "first" and "second" are merely used to differentiate an object or an operation from another object or operation, and do not require or imply any such actual relationship or sequence among these objects or operations. The term "include," "comprise," or any other variation thereof is intended to cover non-exclusive inclusion, so that a process, a method, an article or a device that includes a series of elements not only includes those elements, but also includes other elements not explicitly listed or includes the inherent elements of the process, the method, the article or the device. Without further restrictions, the clause reciting an element by "include a ..." does not exclude the possibility of other identical element existing in the process, the method, the article, or the device that includes the element.

The frame assembly of the UAV and the provided UAV provided by embodiments of the disclosure are described above in detail. The principles and the implementation methods of the present disclosure are explained with specific embodiments, and the description of the embodiments is only used to help to understand the methods and the main idea of the present disclosure. One of ordinary skill in the art can modify the specific implementation method and application area based on the idea of the present disclosure. In summary, the content of this specification should not be considered as a restriction to the present disclosure.

## Claims

1. A frame assembly of an unmanned aerial vehicle (UAV) comprising a center frame and two arm assemblies located at two sides of the center frame, **characterized in that** the arm assembly includes an arm connected with the center frame, a deformation rod, and a support rod, two ends of the deformation rod are rotatably connected with the arm and the support rod, respectively, the support rod and the arm are parallel to each other;
wherein the support arm moves while being parallel to the arm, so that the support rod is selectively in a folded state or an unfolded state;
when the support rod moves translationally relative to the arm to the unfolded state, the support rod drives the deformation rod to rotate, so that the two ends of the deformation rod form first preset angles with the arm and the support rod, respectively, and the support rod is used as a stand;
when the support rod moves translationally relative to the arm to the folded state, the support rod drives the deformation rod to rotate, so that the two ends of the deformation rod form second preset angles with the arm and the support rod, respectively, the second preset angle is smaller than the first preset angle.

2. The frame assembly of claim 1, wherein the first preset angle is larger than or equal to 30° and smaller than or equal to 90°, the second preset angle is smaller than 20°.

3. The frame assembly of claim 1, wherein the arms of the two arm assemblies are parallel to each other with an interval.

4. The frame assembly of claim 3, wherein each arm assembly has at least two deformation rods, and the two ends of the at least two deformation rods are rotatably connected with the arm and the support rod, respectively.

5. The frame assembly of claim 4, wherein each arm assembly has two deformation rods.

6. The frame assembly of claim 4, wherein the at least two deformation rods are parallel to each other.

7. The frame assembly of claim 6, further comprising a driving mechanism, the driving mechanism drives the deformation rods to rotate or drives the support rod to move translationally relative to the arm, so that the support rod approaches or moves away from the arm, correspondingly the support rod moves translationally relative to the arm to the folded state or unfolded state.

8. The frame assembly of claim 7, wherein the driving mechanism drives the at least two deformation rods in the same direction, so that the support rod approaches or moves away from the arm.

9. The frame assembly of claim 8, wherein the distance between two adjacent deformation rods is equal to or longer than lengths of the deformation rods.

10. The frame assembly of claim 9, wherein the driving mechanism drives the deformation rods to rotate to first positions, the deformation rods are sandwiched between the arm and the support rod, and two sides of the deformation rods completely fit the arm and the support rod., respectively

11. The frame assembly of claim 7, further comprising connection rods, the arm is fixedly connected to the center frame by the connection rods;
the driving mechanism drives the at least two deformation rods to rotate around a perpendicular line perpendicular to the support rod, so that the support rod approaches and moves away from the arm.

12. The frame assembly of claim 11, wherein the driving mechanism also drives the at least two deformation rods to rotate around a center axial line of the arm to adjust angles of the deformation rods relative to the perpendicular line.

13. The frame assembly of claim 4, wherein the at least two deformation rods are cross arranged.

14. The frame assembly of claim 7, wherein a bottom of the center frame is configured to mount a gimbal assembly, the two arm assemblies are located on two sides of the gimbal assembly, respectively.

15. The frame assembly of claim 14, wherein the gimbal assembly includes a gimbal connected at the bottom of the center frame and a photographing device carried by the gimbal;
the driving mechanism drives the deformation rods to rotate to the first positions or drives the support rod to move translationally relative to the arm to the folded state, the deformation rods are sandwiched between the arm and the support rod, and the arm assembly is above the photographing device.

16. The frame assembly of claim 15, wherein the deformation rods and the support rod are under the arm.

17. An unmanned aerial vehicle (UAV), comprising a frame assembly and a power system arranged at the frame assembly, the power system is configured to provide flight power to the UAV;
the frame assembly includes a center frame and two arm assemblies located at two sides of the center frame, respectively, the arm assembly includes an arm connected with the center frame, a deformation rod, and a support rod, two ends of the deformation rod are rotatably connected with the arm and the support rod, respectively, and the support rod and the arm are set parallel to each other;
the support rod moves while being parallel to the arm, so that the support rod is selectively in a folded state or an unfolded state;
when the support rod moves translationally relative to the arm, the support rod drives the deformation rods to rotate, so that two ends of the deformation rods form first preset angles with the arm and the support rod, respectively, and the support rod is used as a stand;
when the support rod moves translationally relative to the arm, the support rod drives the deformation rods to rotate, so that the two ends of the deformation rods form second preset angles with the arm and the support rod, respectively, and the second preset angle is smaller than the first preset angle.

18. The UAV of claim 17, wherein the first preset angle is larger than or equal to 30° and smaller than or equal to 90°, and the second preset angle is smaller than 20°.

19. The UAV of claim 17, wherein the arms of the two arm assemblies are parallel to each other with an interval.

20. The UAV of claim 19, wherein each arm assembly has at least two deformation rods, and the two ends of the at least two deformation rods are rotatably connected with the arm and the support rod, respectively.

21. The UAV of claim 20, wherein each arm assembly includes two deformation rods.

22. The UAV of claim 20, wherein the at least two deformation rods are parallel to each other.

23. The UAV of claim 22, further comprising a driving mechanism, the driving mechanism drives the deformation rods to rotate or drives the support rod to move translationally relative to the arm, so that the support rod approaches or moves away from the arm, correspondingly the support rod moves translationally relative to the arm to the folded state or unfolded state.

24. The UAV of claim 23, wherein the driving mechanism drives the at least two deformation rods to rotate in the same direction, so that the support rod approaches and moves away from the arm.

25. The UAV of claim 24, wherein the distance of the two adjacent deformation rods is equal to or longer than lengths of the deformation rods.

26. The UAV of claim 25, wherein the driving mechanism drives the deformation rods to rotate to first positions, the deformation rods are sandwiched between the arm and the support rod, and two sides of the deformation rods completely fit to the arm and the support rod, respectively.

27. The UAV of claim 23, further comprising connection rods, the arm is fixedly connected to the center frame by the connection rods;
the driving mechanism drives the at least two deformation rods to rotate around a perpendicular line perpendicular to the support rod, so that the support rod approaches or moves away from the arm.

28. The UAV of claim 27, wherein the driving mechanism also drives the at least two deformation rods to rotate around a center axial line of the arm to adjust angles of the deformation rods relative to the perpendicular line.

29. The UAV of claim 20, wherein the at least two deformation rods are cross arranged.

30. The UAV of claim 23, further comprising a gimbal assembly, the gimbal assembly is mounted under the center frame, and the two arm assemblies are located at two sides of the gimbal assembly, respectively.

31. The UAV of claim 30, wherein the gimbal assembly includes a gimbal connected at the bottom of the center frame and a photographing device carried by the gimbal;
the driving mechanism drives the deformation rods to rotate to first positions or drives the support rod to move translationally relative to the arm to the folded state, the deformation rods are sandwiched between the arm and the support arm, and the arm assemblies are above the photographing device.

32. The UAV of claim 31, wherein the deformation rods and the support rod are under the arm.
